# FASCICULE DE BREVET EUROPEEN

(11) **EP 2 577 278 B1**
(45) Date de publication et mention de la délivrance du brevet: **08.07.2015**
(21) Numéro de dépôt: 11726878.9
(22) Date de dépôt: 17.05.2011
(51) Int. Cl.: G01N 23/04, G01N 23/18, G21K 1/10

(54) **DISPOSITIF DE CONTRÔLE NON DESTRUCTIF D'UNE PIÈCE MÉCANIQUE**
VORRICHTUNG ZUR ZERSTÖRUNGSFREIEN PRÜFUNG EINES MECHANISCHEN TEILS
DEVICE FOR NON DESTRUCTIVE TESTING OF A MECHANICAL PART

(30) Priorité: 28.05.2010 FR 1054181
(43) Date de publication de la demande: 10.04.2013
(73) Titulaire: Snecma, 75015 Paris (FR)
(72) Inventeur: JACOTIN, Yves, F-77550 Moissy-cramayel Cedex (FR)
(74) Mandataire: Ramey, Daniel
(86) Numéro de dépôt international: PCT/FR2011/051108
(87) Numéro de publication internationale: WO 2011/148079

(56) Documents cités:
- EP-A2- 1 014 078
- WO-A1-02/103338
- FR-A- 1 593 275
- US-A- 2 900 513
- US-A- 3 755 672
- US-A- 4 497 062
- US-A- 4 761 558
- US-A1- 2008 285 706
- US-B2- 6 711 235
- CHEN LINGYUN ET AL: "Feasibility of volume-of-interest (VOI) scanning technique in cone beam breast CTâ a preliminary study", MEDICAL PHYSICS, AIP, MELVILLE, NY, US, vol. 35, no. 8, 8 juillet 2008 (2008-07-08), pages 3482-3490, XP012116177, ISSN: 0094-2405, DOI: DOI:10.1118/1.2948397

## Description

La présente invention concerne un dispositif de contrôle non destructif d'une pièce mécanique, telle qu'une aube de turbine, par transmission d'un rayonnement électromagnétique de haute énergie à travers la pièce.

Parmi les différentes techniques de contrôle non destructif, il est connu de diriger un rayonnement électromagnétique à haute énergie tel qu'un rayonnement X vers une pièce à contrôler et de récupérer le rayonnement émergent au moyen d'un détecteur afin de former une image reflétant l'interaction entre le rayonnement électromagnétique et la structure interne de la pièce à contrôler, ce qui permet de mettre en évidence la présence ou non de défauts dans la pièce.

Toutefois, dans cette technique, le rayonnement émis par la source vient impacter la totalité de la pièce à contrôler et est diffusé par l'environnement de la pièce par la structure interne de cette pièce, ce qui conduit à la formation de zones diffuses et à une diminution du contraste sur les images obtenues ne permettant pas de détecter la présence de défauts.

Cet inconvénient est particulièrement important dans le cas du contrôle d'aubes creuses telles que des aubes d'un étage de turbine et d'une turbomachine. En effet, ces aubes présentent une structure tridimensionnelle interne complexe et comprennent également un revêtement de protection thermique conduisant à une importante diffusion du rayonnement à l'intérieur de celles-ci.

Pour réduire ces difficultés, il a ainsi été proposé de disposer des moyens de filtrage tels qu'une plaque en béryllium entre la source de rayonnement électromagnétique et la pièce à contrôler de manière à éliminer les composantes de faible énergie du rayonnement incident, qui favorisent la formation de rayonnement diffusé.

Il est également connu de disposer un masque absorbant autour de la pièce à contrôler de manière à limiter ou annuler le rayonnement diffusé par l'environnement de la pièce, voir par exemple US20080285706.

Toutefois, aucune de ces deux solutions ne s'avère satisfaisante puisque dans le premier cas, non seulement les moyens de filtrage sont insuffisants pour éliminer tout le rayonnement diffusé par la structure interne de la pièce mais conduisent également à une diminution du contraste et de la sensibilité de détection par suppression d'une partie du rayonnement incident et dans le deuxième cas, le masque est inefficace contre le rayonnement diffusé par la structure interne de la pièce.

L'invention a notamment pour but d'apporter une solution simple, efficace et économique à ces problèmes.

A cette fin, elle propose un dispositif de contrôle non destructif d'une pièce mécanique, telle en particulier qu'une aube de turbine, permettant de diriger sur la pièce à contrôler un rayonnement électromagnétique à haute énergie émis par une source appropriée, de capter le rayonnement qui a traversé la pièce et à former une image de la pièce à partir du rayonnement capté, d'intercaler entre la source et la pièce mécanique un masque en un matériau apte à absorber le rayonnement électromagnétique et comprenant une ouverture, et d'aligner l'ouverture avec la source et une zone donnée à contrôler de la pièce, la forme et les dimensions de l'ouverture étant déterminées pour que seule ladite zone à contrôler de la pièce soit exposée au rayonnement électromagnétique.

Selon l'invention, ce masque est agencé entre la source de rayonnement électromagnétique et la pièce à contrôler et ne laisse passer le rayonnement incident que vers une certaine zone à contrôler de la pièce, ce qui permet d'obtenir une sensibilité de détection optimale, cette zone recevant la totalité des composantes énergétiques du rayonnement émis.

La forme et les dimensions de l'ouverture du masque sont déterminées par rapport à la forme et aux dimensions de la zone à contrôler de la pièce, ce qui évite une exposition au rayonnement incident des autres parties de la pièce et empêche la formation d'un rayonnement diffusé à l'intérieur de la pièce par ces autres parties.

Le masque peut être positionné à une distance quelconque par rapport à la source et par rapport à la pièce, seules la forme et les dimensions de l'ouverture devant être adaptées pour limiter l'exposition à la zone donnée à contrôler comme mentionné ci-dessus.

Avantageusement, la forme de l'ouverture du masque correspond à la projection des contours de la zone donnée à contrôler sur un plan perpendiculaire à l'axe du faisceau émis par la source, et les dimensions de la forme de l'ouverture sont ensuite déterminées par application d'un rapport d'homothétie fonction de la position axiale du masque par rapport à la pièce mécanique et à la source.

Avantageusement, les bords de l'ouverture sont alignés avec les rayons périphériques du faisceau émis par la source de manière à éviter une diffusion du rayonnement incident par les bords de l'ouverture.

Selon une autre caractéristique de l'invention, le masque absorbant est réalisé sous forme d'une plaque dont l'épaisseur dépend de la nature du rayonnement électromagnétique.

La source électromagnétique peut être une source de rayonnement X et dans ce cas l'épaisseur de la plaque en plomb est de l'ordre de 8 mm ou bien être une source de rayonnement γ et dans ce cas la plaque en plomb présente une épaisseur supérieure à 8 millimètres du fait du fort pouvoir de pénétration des rayons γ à travers la matière.

Selon l'invention le dispositif comprend des moyens de support et de positionnement du masque absorbant, des moyens de support et de positionnement de la pièce mécanique et des moyens d'alignement de l'ouverture du masque et de la zone à contrôler de la pièce mécanique avec la source de rayonnement.

Selon l'invention, les moyens de support et de positionnement comprennent un bâti comportant un premier et un second étages superposés selon l'axe du faisceau électromagnétique, le second étage étant agencé entre le premier étage et la source et comprenant au moins un emplacement de réception d'un masque absorbant aligné selon l'axe du faisceau avec au moins un emplacement d'un support de pièce(s) du premier étage.

Selon une autre caractéristique de l'invention, le bâti est mobile en translation selon un axe perpendiculaire à l'axe du faisceau et le premier et le second étage comprennent chacun plusieurs emplacements précités alignés selon ledit axe de translation.

Avantageusement, chaque support monté dans un emplacement du premier étage comporte des bossages de positionnement d'au moins une pièce mécanique pour le contrôle d'une zone donnée de la pièce mécanique.

Dans cette deuxième réalisation, l'opérateur place au moins une pièce sur le support lequel permet grâce à ses bossages une orientation prédéterminée d'une zone donnée à contrôler de la pièce, le support étant ensuite monté dans un emplacement du premier étage. Le masque comprenant une ouverture adaptée à l'exposition de la zone donnée est monté dans l'emplacement du second étage qui est aligné avec l'axe du faisceau. Une exposition au rayonnement est ensuite réalisée et une image de la zone donnée est obtenue.

Le bâti est ensuite déplacé selon son axe de translation de manière à amener un emplacement du premier étage et un emplacement du second étage dans l'axe du faisceau électromagnétique et les opérations précédentes sont répétées avec un support et un masque différents permettant l'observation d'une autre zone donnée de la pièce mécanique.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une représentation schématique d'un dispositif de contrôle non destructif par émission d'un rayonnement électromagnétique selon la technique antérieure ;
- la figure 2 est une représentation schématique du procédé de contrôle non destructif par émission d'un rayonnement électromagnétique selon l'invention ;
- la figure 3 représente une aube de turbine de turbomachine et la zone donnée correspondant au bord d'attaque qui est seule exposée au rayonnement électromagnétique ;
- la figure 4 représente également une aube de turbine, la zone donnée exposée au rayonnement électromagnétique correspondant au pied de l'aube ;
- la figure 5 est une représentation schématique d'un dispositif de contrôle en dehors de l'objet de l'invention ;
- la figure 6 est une vue en perspective d'un plateau de support de masques utilisé avec le dispositif de la figure 5 ;
- les figures 7 et 8 représentent un dispositif de contrôle selon l'invention ;
- la figure 9 représente un support de pièces destiné à être utilisé avec le dispositif des figures 7 et 8.
- la figure 10 est une vue schématique en perspective d'un masque utilisé avec le dispositif des figures 7 et 8 ;
- la figure 11 est une représentation schématique des bords d'une ouverture d'un masque absorbant utilisé avec le dispositif selon l'invention.

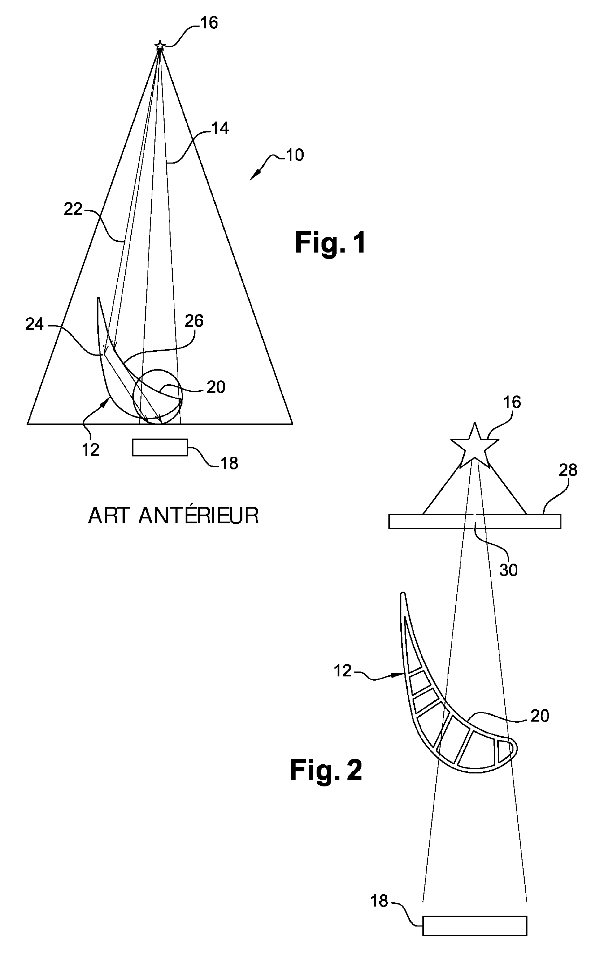

On se réfère tout d'abord à la figure 1 qui représente un dispositif 10 de contrôle d'une pièce mécanique 12 par transmission d'un rayonnement électromagnétique 14 à travers la pièce 12. Le dispositif 10 comprend une source 16 de rayonnement électromagnétique de haute énergie, c'est-à-dire capable de traverser la pièce mécanique 12. La pièce mécanique 12 est placée en regard de la source 16 dans le faisceau émis par celle-ci. Un détecteur 18 est aligné avec la source 16 et la pièce 12 et est agencé à l'opposé de la source 16 par rapport à la pièce 12 de manière à recevoir le rayonnement transmis à travers la pièce mécanique 12. Une image en niveau de gris est ensuite obtenue et représente l'atténuation du rayonnement à la traversée de la pièce mécanique 12. Avec une telle image, il est en principe possible de détecter la présence ou non de défauts de la pièce 12 par rapport à une image de référence.

Toutefois, ce dispositif 10 n'est pas satisfaisant puisque le rayonnement incident n'est pas limité à la zone 20 à contrôler et une partie du rayonnement incident 22 émis par la source 16 interagit avec d'autres zones 24 de la pièce 12, ce qui génère un rayonnement diffusé 26 à l'intérieur de la pièce 12 qui vient s'ajouter au rayonnement diffusé par la zone à contrôler et conduit à la formation de zones floues sur les images obtenues diminuant la sensibilité de détection aux défauts.

En plus de la diffusion du rayonnement incident par la structure interne de la pièce 12, une diffusion par l'environnement de la pièce est également possible, conduisant à dégrader davantage les images obtenues.

Ceci est particulièrement vrai dans le cas d'aubes de turbine 12 ayant une géométrie interne tridimensionnelle complexe comme mentionné précédemment. Il s'ensuit que le contrôle des zones critiques telles que par exemple les bords d'attaque des aubes ou les pieds des aubes ne peut pas être réalisé de manière satisfaisante.

L'invention apporte une solution à ce problème en intercalant un masque 28 absorbant le rayonnement électromagnétique entre la pièce 12 à contrôler et la source de rayonnement, ce masque comprenant une ouverture 30 pour le passage sans absorption d'une partie du rayonnement incident vers une zone donnée 20 à contrôler de la pièce mécanique 12. La forme et les dimensions de l'ouverture sont déterminées par rapport à la zone donnée à contrôler de manière à que seule ladite zone à contrôler soit exposée au rayonnement électromagnétique lorsque l'ouverture est alignée avec la source de rayonnement et la zone à contrôler (figure 2).

Avec un tel procédé, on évite qu'un rayonnement soit diffusé par les autres zones de la pièce et par l'environnement de la pièce, ce qui permet d'augmenter le contraste sur les images des zones exposées au rayonnement et améliore donc la sensibilité de détection des défauts.

D'une manière pratique, la forme de l'ouverture du masque correspond à la projection des contours de la zone donnée à contrôler sur un plan perpendiculaire à l'axe du faisceau émis par la source, et les dimensions de la forme de l'ouverture sont ensuite déterminées par application d'un rapport d'homothétie fonction de la position axiale du masque 28 par rapport à la pièce mécanique 12 et à la source 16.

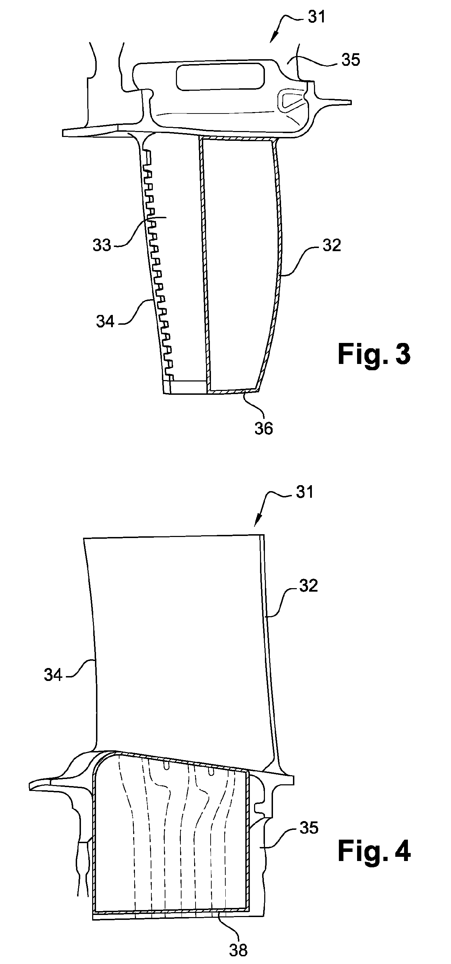

La figure 3 représente une aube de turbine 31 de turbomachine comprenant une pale 33 reliée à un pied 35. La pale 33 comporte un bord d'attaque 32 et un bord de fuite 34. L'utilisation du dispositif selon l'invention permet d'exposer au rayonnement électromagnétique seulement une partie amont de l'aube comprenant le bord d'attaque (partie 36 délimitée en traits pleins sur la figure 3) ou bien seulement une partie du pied d'aube (partie 38 délimitée en en traits pleins sur la figure 4) en utilisant un masque ayant une ouverture de même forme que la zone donnée 36 ou 38 à contrôler, seules les dimensions de l'ouverture 30 du masque 28 étant réduites par homothétie en fonction du positionnement du masque 28 entre la source 16 et la pièce mécanique 12.

Dans la suite de la description, on décrira deux dispositifs de contrôle Ces dispositifs comprennent chacun des moyens de support et de positionnement du masque absorbant, des moyens de support et de positionnement de la pièce mécanique et des moyens d'alignement de l'ouverture du masque et de la zone à contrôler de la pièce mécanique avec la source de rayonnement.

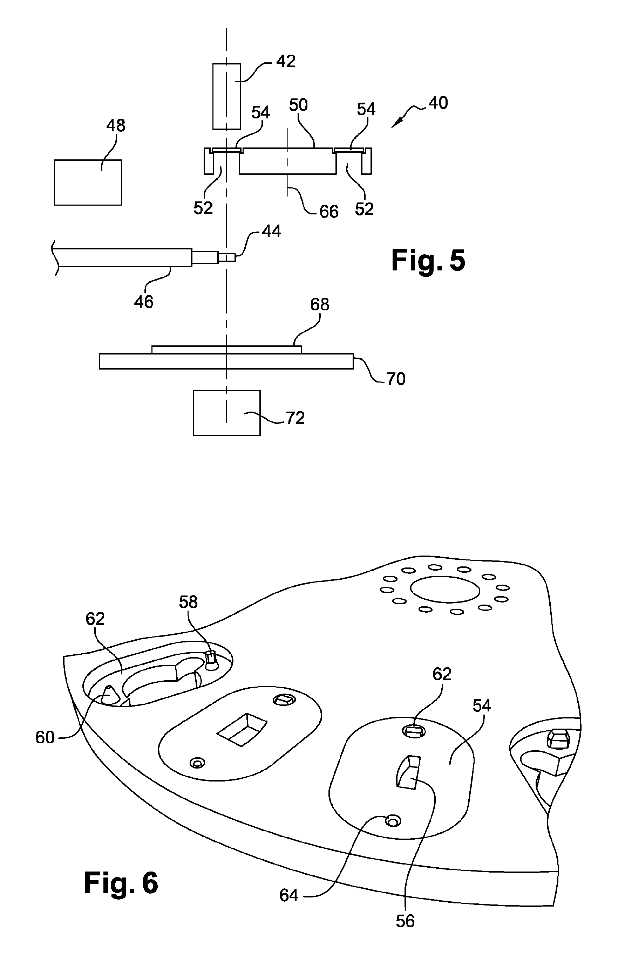

Dans une première réalisation en dehors de l'objet de l'invention et représentée aux figures 5 et 6, le dispositif 40 comprend une source fixe 42 émettant un rayonnement électromagnétique en direction d'une pièce mécanique 44 portée par un bras robot 46 articulé apte à se saisir d'une pièce mécanique stockée par exemple dans un magasin 48 situé à proximité (figure 5). Le bras robot 46 comporte six degrés de liberté de manière à permettre une orientation de n'importe quelle zone de la pièce mécanique 44 en regard de la source de rayonnement 42.

Un plateau circulaire 50 est monté entre la source de rayonnement 42 et la pièce mécanique 44 et comporte plusieurs logements 52 creux agencés en cercle sur sa périphérie externe (figure 6). Chaque logement 52 est destiné à recevoir un masque plan absorbant 54 comportant une seule ouverture 56.

Chaque logement 52 comprend des moyens de détrompage au montage du masque absorbant 54. Ces moyens de détrompage comprennent deux tiges 58, 60 formées sur un rebord interne 62 d'un logement 52 et orientées vers la source 42, l'une 58 des tiges étant à section carrée et l'autre 60 ayant une forme tronconique. Les deux tiges 58, 60 de détrompage sont reçues dans des orifices 62, 64 correspondants du masque 50 de manière à garantir que le masque 50 est correctement monté dans son logement 52 et qu'ainsi l'ouverture 56 de chaque masque 50 est positionnée dans une position prédéterminée connue prévue pour le passage du rayonnement électromagnétique en direction d'une zone donnée à contrôler d'une pièce.

Le plateau 50 est monté à rotation selon un axe 66 par rapport à la source fixe 42 de sorte que la rotation du plateau 50 amène successivement l'ouverture d'un masque 54 en alignement avec la source 42 et une zone donnée à contrôler d'une pièce mécanique.

Un amplificateur de brillance 68 est monté sur un support 70 et permet la conversion du rayonnement électromagnétique haute énergie transmis à travers la pièce 44 en un rayonnement lumineux capté par une caméra 72.

Le dispositif 40 est utilisé de la manière suivante. En premier lieu, le bras robot 46 est commandé de manière à se saisir d'une pièce mécanique 44 dans le magasin 48 et amène une zone donnée à contrôler, par exemple le pied d'aube, dans une orientation déterminée en regard de la source. On fait tourner le plateau 50 selon son axe 66 de manière à amener l'ouverture d'un masque 54 adapté au pied d'aube en alignement avec la source 42 et le pied de l'aube. La source 42 émet ensuite un rayonnement électromagnétique de haute énergie dont une partie est absorbée par le masque 54 et dont la partie restante passe par l'ouverture du masque 54 et impacte le pied d'aube. Le rayonnement transmis est ensuite converti par l'amplificateur de brillance 68 puis capté par la caméra 72.

Pour effectuer le contrôle de la partie du bord d'attaque de l'aube, il suffit de modifier l'orientation de la pièce 44 pour cette zone soit en regard de la source 42. Le plateau 50 est tourné pour que le masque 54 correspondant à l'observation de la partie bord d'attaque soit en alignement avec la source 42 et la pièce 44, puis on effectue une nouvelle acquisition.

Dans ce dispositif, l'alignement de l'ouverture d'un masque 54 avec une zone donnée à contrôler d'une pièce mécanique est essentiellement réalisé par le bras robot articulé 46 grâce à ses six degrés de liberté, le plateau 50 rotatif assurant le positionnement du masque en regard de la source 42.

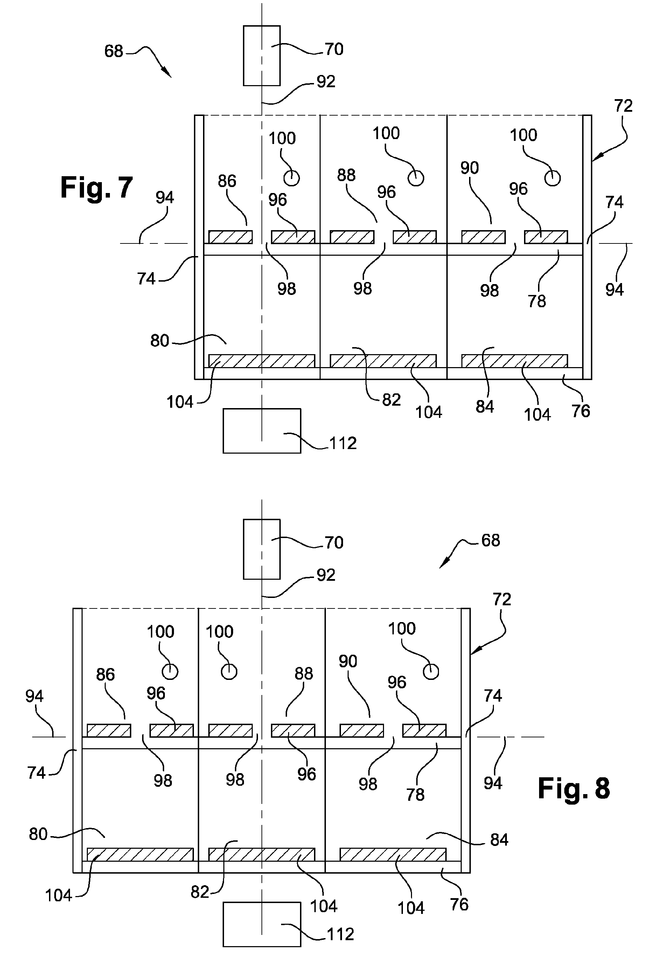

Les figures 7 à 10 représentent un second dispositif 68 de contrôle selon l'invention.

Ce second dispositif 68 comprend une source 70 de rayonnement électromagnétique haute énergie, disposée au dessus d'un bâti 72 comportant des montants 74 supportant un premier étage 76 et un second étage 78 superposés selon l'axe du faisceau. Le second étage 78 est agencé entre le premier étage 76 et la source de rayonnement 70. Chaque étage comprend trois emplacements 80, 82, 84, 86, 88, 90. Les emplacements des premier et second étages sont positionnés de sorte qu'un emplacement du premier étage est aligné dans l'axe 92 du faisceau avec un emplacement du second étage. Les emplacements de chaque étage sont également alignés selon un axe 94 perpendiculaire à l'axe du faisceau 92, cet axe 94 définissant un axe suivant lequel le bâti 72 est déplaçable.

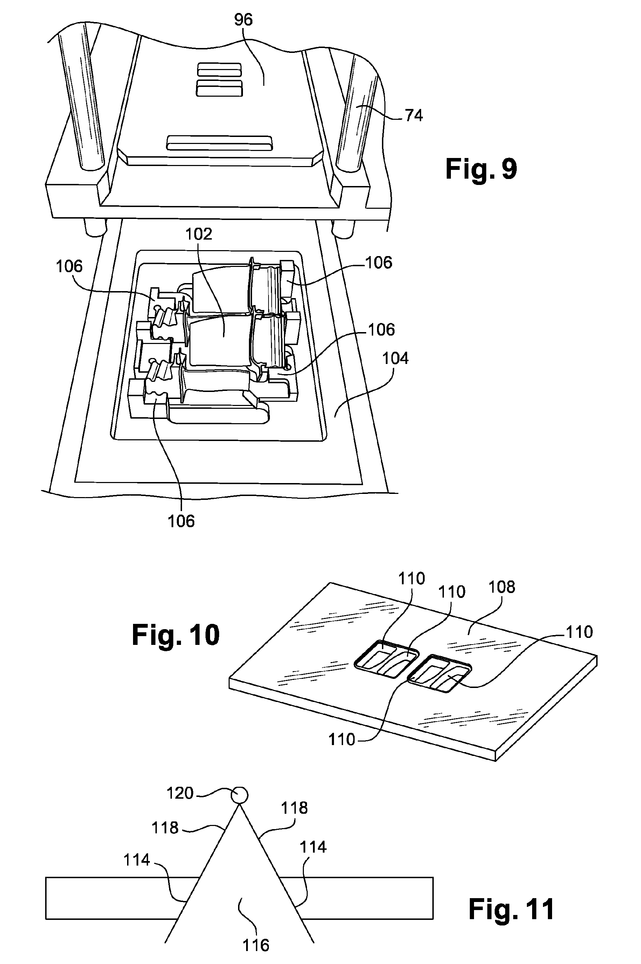

Les emplacements 86, 88, 90 du second étage 78 sont chacun destinés à recevoir un masque absorbant 96 sous forme d'une plaque comportant au moins une ouverture 98 (figure 9). Chaque masque absorbant 96 est engagé axialement dans un emplacement 86, 88, 90 du second étage 78 selon un axe 100 perpendiculaire à la fois à l'axe 92 du faisceau électromagnétique et à l'axe 94 de translation du bâti 72.

Les pièces à contrôler 102 sont montées dans des supports 104 comportant des bossages 106 de positionnement d'une zone donnée de chaque pièce 102 dans une position dans laquelle ladite zone donnée est alignée avec une ouverture 98 d'un masque 96 et avec la source 70 (figures 7 et 9).

Chaque support 104 de pièce est engagé par translation dans un emplacement 80, 82, 84 du premier étage 76 selon l'axe 100.

Des moyens de butée (non représentés) sont prévus aux extrémités arrière des emplacements 80, 82, 84, 86, 88, 90 des premier et second étages 76, 78 et réalisent un indexage selon l'axe 100 de chaque masque 96 par rapport au support de pièce 104 associé et donc réalisent un indexage selon l'axe 100 des ouvertures 98 de chaque masque 96 par rapport aux zones données à contrôler des pièces 102 montées dans les supports associés 104.

Les supports de pièces 104 et les masques 96 sont dimensionnés de manière à être insérés dans leurs emplacements respectifs sans jeu selon l'axe 94 de déplacement du bâti afin de réaliser un indexage selon cet axe 94 des ouvertures 98 des masques 96 du second étage 78 par rapport aux zones données à contrôler des pièces 102 montées dans les supports 104 du premier étage 76.

Ces moyens d'indexage utilisés en combinaison avec les bossages 106 des supports 104 permettent de réaliser un parfait alignement des ouvertures 98 des masques 96 du second étage 78 avec les zones données des pièces à contrôler du premier étage 76.

Bien que non représentés sur les figures de ce second dispositif, des moyens de détrompage peuvent également être prévus pour éviter un mauvais montage des masques 96 et des supports de pièces 104 dans leurs emplacements respectifs.

Dans une réalisation particulière, un premier masque 108 comprend quatre ouvertures 110 adaptées à l'observation des parties de bords d'attaque de quatre aubes de turbine et un premier support de pièces comporte des bossages adaptés au positionnement des parties de bords d'attaque de quatre aubes différentes. Ainsi, lorsque le masque 108 est engagé dans un emplacement 86 du second étage 78 et que le support est engagé dans l'emplacement associé 80 du premier étage 76, chaque ouverture 110 du masque 108 est alignée avec une partie de bord d'attaque d'une aube différente. Un faisceau électromagnétique de haute énergie est ensuite émis et génère un rayonnement transmis simultanément à travers les quatre parties de bord d'attaque des quatre aubes, le rayonnement transmis étant capté par un récepteur 112 (figures 7 et 8).

Ce second dispositif 68 présente ainsi l'avantage par rapport au premier dispositif de permettre le contrôle simultané de zones données de plusieurs pièces, ce qui réduit le temps nécessaire au contrôle de ces pièces.

Pour effectuer ensuite le contrôle simultané d'autres zones de ces aubes, il suffit de positionner les aubes dans un second support comportant des bossages prévus à cet effet puis d'engager ce second support qui porte les aubes repositionnées dans l'emplacement 82 du premier étage 76, l'emplacement associé 88 du second étage 78 comportant un masque à quatre ouvertures adaptées à l'exposition des seules autres parties au rayonnement électromagnétique. Le bâti 72 est ensuite déplacé par translation selon l'axe 94 pour amener la source 70 de rayonnement électromagnétique en alignement avec les ouvertures du second masque et avec les autres parties d'aubes du second support (figure 8).

Le déplacement manuel des aubes dans un second support s'avère peu contraignant pour un opérateur puisque cela lui évite d'avoir à manipuler les masques absorbants qui sont très lourds, ces masques restant en position dans leurs emplacements.

Les supports de pièces utilisés dans ce second dispositif peuvent par exemple être réalisés en résine moulée.

Les masques absorbants 54, 96, 110 peuvent être réalisés en plomb et leur épaisseur est de l'ordre de 8 mm lorsque le rayonnement électromagnétique est un rayonnement X. D'autres sources de rayonnement peuvent être utilisées et en particulier une source de rayonnement γ. Dans ce dernier cas, le masque 54, 96, 110 a une épaisseur plus importante et de l'ordre de 15 mm du fait du fort pouvoir de pénétration de ce type de rayonnement.

Les masques en plomb sont avantageusement recouverts d'une fine couche d'aluminium pour éviter toute contamination au plomb des opérateurs manipulant les masques. Les bords des ouvertures sont toutefois dépourvus d'aluminium pour éviter la formation d'un rayonnement diffusé par les bords des ouvertures.

Pour éviter tout rayonnement diffusé par les bords 114 d'une ouverture du masque, il est souhaitable que les bords 114 de l'ouverture 116 soient alignés avec les rayons périphériques 118 du faisceau émis par la source 120 comme représenté schématiquement en figure 11.

L'invention peut être utilisée en combinaison avec un masque absorbant de la technique antérieure monté autour de la pièce mécanique.

## Revendications

1. Dispositif de contrôle non destructif d'une pièce mécanique, telle en particulier qu'une aube de turbine, comprenant une source d'émission d'un faisceau électromagnétique à haute énergie selon un axe (92) , un détecteur (118) agencé de manière à recevoir le faisceau transmis à travers la pièce (12) et un masque réalisé dans un matériau apte à absorber le faisceau électromagnétique et comprenant une ouverture dont la forme et les dimensions sont déterminées pour que seule une zone donnée à contrôler de la pièce (12) soit exposée au faisceau électromagnétique, le dispositif comprenant des moyens de support et de positionnement du masque absorbant et de la pièce mécanique et des moyens d'alignement de l'ouverture du masque et de la zone à contrôler de la pièce mécanique avec la source , les moyens de support et de positionnement comprenant un bâti (72) comportant un premier (76) et un second (78) étages superposés selon l'axe (92) du faisceau électromagnétique, le second étage (78) étant agencé entre le premier étage (76) et la source (70) et comprenant au moins un emplacement (86, 88, 90) de réception d'un masque absorbant (96) aligné dans l'axe (92) du faisceau avec au moins un emplacement (80, 82, 84) d'un support de pièce (104) du premier étage (76).

2. Dispositif selon la revendication 1, **caractérisé en ce que** le bâti (74) est mobile en translation selon un axe perpendiculaire (94) à l'axe (92) du faisceau et **en ce que** le premier (76) et le second (78) étages comprennent chacun plusieurs emplacements (80, 82, 84, 86, 88, 90) précités alignés selon ledit axe de translation (94).

3. Dispositif selon la revendication 1 ou 2, **caractérisé en ce que** chaque support (104) monté dans un emplacement du premier étage comporte des bossages (106) de positionnement d'au moins une pièce mécanique (102) pour le contrôle d'une zone donnée de la pièce mécanique (102).

4. Dispositif selon l'une des revendications 1 à 3, **caractérisé en ce que**, lorsque l'ouverture du masque est alignée avec la zone à contrôler de la pièce mécanique, la forme de l'ouverture (30) du masque (28) correspond à la projection des contours de la zone donnée à contrôler sur un plan perpendiculaire à l'axe du faisceau émis par la source (16), et les dimensions de la forme de l'ouverture (30) sont ensuite déterminées par application d'un rapport d'homothétie fonction de la position axiale du masque (28) par rapport à la pièce mécanique (12) et à la source (16).

5. Dispositif selon l'une des revendications 1 à 4, **caractérisé en ce que** les bords (114) de l'ouverture (116) sont alignés avec les rayons périphériques (118) du faisceau émis par la source (120).

6. Dispositif selon l'une des revendications 1 à 5, **caractérisé en ce que** le masque absorbant (54, 96, 110) est réalisé sous forme d'une plaque dont l'épaisseur dépend de la nature du rayonnement électromagnétique.

7. Dispositif selon l'une des revendications 1 à 6, **caractérisé en ce que** la source électromagnétique (16, 42, 70, 120) est une source de rayonnement X ou une source de rayonnement γ.

8. Dispositif selon l'une des revendications 1 à 7, **caractérisé en ce qu'**un autre masque apte à absorber le rayonnement électromagnétique est agencé autour de la pièce mécanique (12).

## Patentansprüche

1. Vorrichtung zur zerstörungsfreien Prüfung eines mechanischen Werkstücks, wie insbesondere einer Turbinenschaufel, enthaltend eine Emissionsquelle zum Emittieren eines elektromagnetischen Hochenergiestrahls in einer Achse (92), einen Sensor (118), der so angeordnet ist, dass er den durch das Werkstück (12) hindurch übertragenen Strahl empfängt, und eine Maske, die aus einem Material hergestellt ist, das dazu geeignet ist, den elektromagnetischen Strahl zu absorbieren, und die eine Öffnung aufweist, deren Form und Abmessungen so bestimmt sind, dass nur ein gegebener, zu prüfender Bereich des Werkstücks (12) dem elektromagnetischen Strahl ausgesetzt wird, wobei die Vorrichtung Mittel zum Tragen und Positionieren der absorbierenden Maske und des mechanischen Werkstücks sowie Mittel zum Ausrichten der Öffnung der Maske und des zu prüfenden Bereichs des mechanischen Werkstücks mit der Quelle aufweist, wobei die Trage- und Positioniermittel ein Gestell (72) aufweisen, das eine erste (76) und eine zweite (78) Stufe aufweist, die in der Achse (92) des elektromagnetischen Strahls übereinanderliegen, wobei die zweite Stufe (78) zwischen der ersten Stufe (76) und der Quelle (70) angeordnet ist und zumindest eine Aufnahmestelle (86, 88, 90) zum Aufnehmen einer absorbierenden Maske (96) aufweist, die in der Achse (92) des Strahls mit zumindest einer Stelle (80, 82, 84) eines Werkstückträgers (104) für die erste Stufe (76) ausgerichtet ist.

2. Vorrichtung nach Anspruch 1, **dadurch gekennzeichnet, dass** das Gestell (74) in einer Achse (94) senkrecht zur Achse (92) des Strahls translatorisch verschiebbar ist und dass die erste (76) und die zweite (78) Stufe jeweils mehrere vorgenannte Stellen (80, 82, 84, 86, 88, 90) aufweisen, die in der Verschiebeachse (94) ausgerichtet sind.

3. Vorrichtung nach Anspruch 1 oder 2, **dadurch gekennzeichnet, dass** jeder an einer Stelle der ersten Stufe angebrachte Träger (104) Erhebungen (106) zum Positionieren zumindest eines mechanischen Werkstücks (102) zum Prüfen eines gegebenen Bereichs des mechanischen Werkstücks (102) aufweist.

4. Vorrichtung nach einem der Ansprüche 1 bis 3, **dadurch gekennzeichnet, dass** dann, wenn die Öffnung der Maske mit dem zu prüfenden Bereich des mechanischen Werkstücks ausgerichtet ist, die Form der Öffnung (30) der Maske (28) der Projektion der Konturen des gegebenen, zu prüfenden Bereichs auf einer Ebene senkrecht zur Achse des von der Quelle (16) ausgegebenen Strahls entspricht und die Abmessungen der Form der Öffnung (30) dann durch Anwendung eines homothetischen Verhältnisses, das Funktion von der axialen Stellung der Maske (28) bezüglich des mechanischen Werkstücks (12) und der Quelle (16) ist, bestimmt werden.

5. Vorrichtung nach einem der Ansprüche 1 bis 4, **dadurch gekennzeichnet, dass** die Ränder (114) der Öffnung (116) mit den Umfangsradien (118) des von der Quelle (120) ausgegebenen Strahls ausgerichtet sind.

6. Vorrichtung nach einem der Ansprüche 1 bis 5, **dadurch gekennzeichnet, dass** die absorbierende Maske (54, 96, 110) in Form einer Platte ausgebildet ist, deren Dicke von der Beschaffenheit der elektromagnetischen Strahlung abhängt.

7. Vorrichtung nach einem der Ansprüche 1 bis 6, **dadurch gekennzeichnet, dass** die elektromagnetische Quelle (16, 42, 70, 120) eine Röntgenstrahlungsquelle oder eine γ-Strahlungsquelle ist.

8. Vorrichtung nach einem der Ansprüche 1 bis 7, **dadurch gekennzeichnet, dass** eine weitere Maske, die dazu geeignet ist, die elektromagnetische Strahlung zu absorbieren, um das mechanische Werkstück (12) herum angeordnet ist.

## Claims

1. A device for non-destructive inspection of a mechanical part, such as a turbine blade in particular, comprising a source suitable for emitting a high energy electromagnetic radiation in a direction (92) a detector (118) arranged to receive the beam transmitted through the part (12) and a mask of material that is suitable for absorbing the electromagnetic radiation and comprising an opening, the shape and the dimensions of the opening being determined so that only the given zone (for inspection of the part (12) is exposed to the electromagnetic radiation, the device comprising means for supporting and positioning the absorbent mask and the mechanical part, and means for aligning the opening in the mask and the zone for inspection of the mechanical part with the radiation source, the support and positioning means comprising a structure (72) having first (76) and second stages (78) superposed along the axis (92) of the electromagnetic beam, the second stage (78) being arranged between the first stage (76) and the source (70) and including at least one location (86, 88, 90) for receiving an absorbent mask (96) in alignment on the axis (92) of the beam with at least one location (80, 82, 84) for a parts support (104) of the first stage (76).

2. A device according to claim 1, **characterized in that** the structure (74) is movable in translation along an axis (94) perpendicular to the axis (92) of the beam, and **in that** each of the first (76) and second stages (78) includes a plurality of the above-mentioned locations (80, 82, 84, 86, 88, 90) in alignment along said perpendicular translation axis (94).

3. A device according to claim 1 or claim 2, **characterized in that** each support (104) mounted in a location of the first stage includes projections (106) for positioning at least one mechanical part (102) for inspecting a given zone of the mechanical part (102).

4. A device according to one of claims 1 to 3, **characterized in that** the opening being aligned with the part for inspection of the mechanical piece, the shape of the opening (30) in the mask (28) corresponds to the projection of the outlines of the given zone for inspection onto a plane perpendicular to the axis of the beam emitted by the source (16), and the dimensions of the shape of the opening (30) are then determined by applying a scaling ratio that is a function of the axial position of the mask (28) relative to the mechanical part (12) and the source (16).

5. A device according to one of claims 1 to 4, **characterized in that** the edges (114) of the opening (116) are in alignment with the peripheral rays (118) of the beam emitted by the source (120).

6. A device according to one of claims 1 to 5, **characterized in that** the absorbent mask (54, 96, 110) is made in the form of a plate of a thickness that depends on the nature of the electromagnetic radiation.

7. A device according to one of claims 1 to 6, **characterized in that** the source of electromagnetic radiation (16, 42, 70, 120) is an X-ray source or a gamma ray source.

8. A device according to one of claims 1 to 7, **characterized in that** another mask suitable for absorbing the electromagnetic radiation is arranged around the mechanical part (12).
